# EUROPEAN PATENT APPLICATION

(11) **EP 4 817 865 A1**
(43) Date of publication of application: **07.10.2026**
(21) Application number: 24897458.6
(22) Date of filing: 22.11.2024
(51) Int. Cl.: B32B 5/24, B32B 27/12, B32B 27/40, D06M 15/564, D06M 15/647, D06N 3/14, D06N 7/00

(54) **BREATHABLE WATERPROOF MATERIAL AND METHOD FOR PRODUCING BREATHABLE WATERPROOF MATERIAL**

(30) Priority: 30.11.2023 JP 2023202716
(71) Applicant: Toray Industries, Inc., Tokyo 103-8666 (JP); Toray Coatex Co., Ltd., Kyoto-shi, Kyoto 601-8324 (JP)
(72) Inventor: SHINOZAKI, Atsushi, Osaka-shi, Osaka 530-8222 (JP); YAMADA, Kohei, Kyoto-shi, Kyoto 601-8324 (JP); OKUMURA, Kaori, Kyoto-shi, Kyoto 601-8324 (JP)
(74) Representative: Mewburn Ellis LLP
(86) International application number: PCT/JP2024/041418
(87) International publication number: WO 2025/115772

(57) **Abstract**

The present invention has been made to provide a non-fluorine waterproof moisture-permeable textile that has a high waterproof property and wash durability, can offer sufficient adhesive force even when a film or a backing is bonded to a waterproof surface, and is excellent in wearing durability without using a fluorinated compound. The present invention provides a moisture-permeable waterproof material including a fabric and a porous polyurethane layer laminated, in which a silicone-based water repellent adheres to an inner surface of pores of the porous polyurethane layer.

## Description

### TECHNICAL FIELD

The present invention relates to a moisture-permeable waterproof fabric suitably used for rainwear for sports and the like, and a method for producing the same.

### BACKGROUND ART

A conventional wet coating-type moisture-permeable waterproof material is produced by a method in which mainly a polyurethane resin is dissolved in a solvent soluble in water, a fluorine-based water repellent is further mixed to coat a fabric, and the coating is wet-gelled. When the solvent is replaced with water, the porous polyurethane film containing the fluorine-based water repellent formed on the fabric does not allow rain or other water to pass but allows moisture (water vapor) to pass. Such moisture-permeable waterproof fabrics are disclosed, for example, in Patent Documents 1 and 2.

### PRIOR ART DOCUMENTS

### PATENT DOCUMENTS

Patent Document 1: Japanese Patent Laid-open Publication No. S60-47954
Patent Document 2: Japanese Patent Laid-open Publication No. H11-131373

### SUMMARY OF THE INVENTION

### PROBLEMS TO BE SOLVED BY THE INVENTION

From the recent trend of laws and regulations, it is required not to use fluorinated compounds, but by simply replacing a fluorine-based water repellent with a non-fluorine-based water repellent, performance at the same level cannot be obtained.

The present invention has been made in view of the above, and an object of the present invention is to provide a non-fluorine waterproof moisture-permeable textile that has a high waterproof property and wash durability, can offer sufficient adhesive force even when a film or a backing is bonded to a waterproof surface, and is excellent in wearing durability.

### SOLUTIONS TO THE PROBLEMS

The present inventors have made earnest investigations to solve the above-mentioned problems, and consequently completed the present invention. The present invention has the following configurations.
(1) A moisture-permeable waterproof material including a fabric and a porous polyurethane layer laminated, in which a silicone-based water repellent adheres to an inner surface of pores of the porous polyurethane layer.
(2) The moisture-permeable waterproof material according to (1), in which the silicone-based water repellent is modified silicone.
(3) The moisture-permeable waterproof material according to (1) or (2), having a water resistance of 5,000 mm H2O or more after washing 10 times, and being not wetted with water in a Suter test of holding at a water pressure of 2,000 mm H2O for 10 minutes.
(4) The moisture-permeable waterproof material according to any one of (1) to (3), in which a peel strength between the porous polyurethane layer and the fabric is 200 cN/cm or more.
(5) The moisture-permeable waterproof material according to any one of (1) to (4), in which a non-porous hydrophilic resin layer and/or a second fabric is further laminated on a surface of the porous polyurethane layer opposite to a surface laminated with the fabric.
(6) The moisture-permeable waterproof material according to (5), in which there is no peeling between the porous polyurethane layer and the non-porous hydrophilic resin layer.
(7) The moisture-permeable waterproof material according to claim 5, in which water resistance after washing 10 times is 10,000 mm H2O or more.
(8) A method for producing a moisture-permeable waterproof material including a porous polyurethane layer and a fabric laminated, the method including a step of attaching a silicone-based water repellent to a surface of a laminated sheet including a laminate of the porous polyurethane layer and the fabric, the surface being opposite to a surface of the porous polyurethane layer laminated with the fabric.
(9) The method for producing a moisture-permeable waterproof material according to (8), in which a coating method is used in the step of attaching the silicone-based water repellent.

### EFFECTS OF THE INVENTION

The textile according to the present invention has water resistance performance having high wash durability even though a fluorinated compound is not used, and can offer sufficient peel strength enough to withstand wearing even when a non-porous resin layer or a backing is bonded to the porous membrane surface.

### BRIEF DESCRIPTION OF THE DRAWINGS

Fig. 1 is a sectional view illustrating a configuration of a moisture-permeable waterproof fiber material according to an embodiment of the present invention.
Fig. 2 is a sectional view illustrating a configuration of the moisture-permeable waterproof fiber material according to the embodiment of the present invention.
Fig. 3 is a sectional view illustrating a configuration of the moisture-permeable waterproof fiber material according to the embodiment of the present invention.
Fig. 4 is a sectional view illustrating a configuration of the moisture-permeable waterproof fiber material according to the embodiment of the present invention.

### EMBODIMENTS OF THE INVENTION

Hereinafter, the present invention will be described in more detail.

A moisture-permeable waterproof material of the present invention is formed by laminating a porous polyurethane layer and a fabric.

Examples of a useful fiber material constituting the fabric include polyester, nylon, acrylic, polyurethane, and rayon such as acetate and viscose, and in addition to these, chemical fibers such as polylactic acid, aromatic polyamide, polyimide, and polyphenylene sulfide, natural fibers such as cotton, hemp, silk, and wool, or commingled fibers, mixed-spun products, interwoven fabrics, or interknitted fabrics of these materials can be used. Among them, the material of the fiber preferably contains polyester or nylon. From the viewpoint of dye migration by sublimation to the polyurethane resin to be coated, a nylon-based material that is dyed with an acid dye is preferable. From the viewpoint of performance such as water resistance and moisture permeability, polyester-based or olefin-based synthetic fibers, or commingled fibers or mixed-spun products with natural fibers may be used.

The fibers constituting the fabric may be either long fibers or short fibers. A yarn using the fiber may be any of a grey yarn (flat yarn), a twisted yarn, and a textured yarn. The textured yarn is also not particularly limited, and a false twisted yarn (such as woolly yarn, DTY, and modified false twisted yarn), a stuffer-box textured yarn, a shaped textured yarn, an edge-crimped yarn, a Taslan textured yarn, a paralleled yarn with different yarn lengths, a composite textured yarn, a fluffed yarn, an interlaced bundled yarn, an interlaced commingled yarn, and the like can be used. From the viewpoint of attaching a large amount of a silicone-based water repellent to the fiber surface to enhance water repellency and from the viewpoint of improving tear strength, it is preferable to use a textured yarn.

In the drawings, the fabric (face fabric) is schematically illustrated as a cross-sectional view of a woven fabric, but may be a knitted fabric or a nonwoven fabric instead of a woven fabric.

In the moisture-permeable waterproof material of the present invention, a water repellent not containing a fluorinated compound such as a silicone-based water repellent may also be attached to the fabric.

The timing at which the fabric (face fabric) is subjected to hydrophobic treatment is preferably before the porous polyurethane layer is laminated. Specifically, for example, the hydrophobic treatment can be performed by using a water repellent not containing a fluorinated compound such as a silicone-based water repellent, and at least one of a crosslinking agent, a penetrant, and a pH control agent, and performing treatment such as a pad method and a spray method, followed by drying and curing. It is preferable that performance of grade 4 or higher before washing and grade 3 or higher after 20 times of washing in the spray test of JIS L 1092 be imparted.

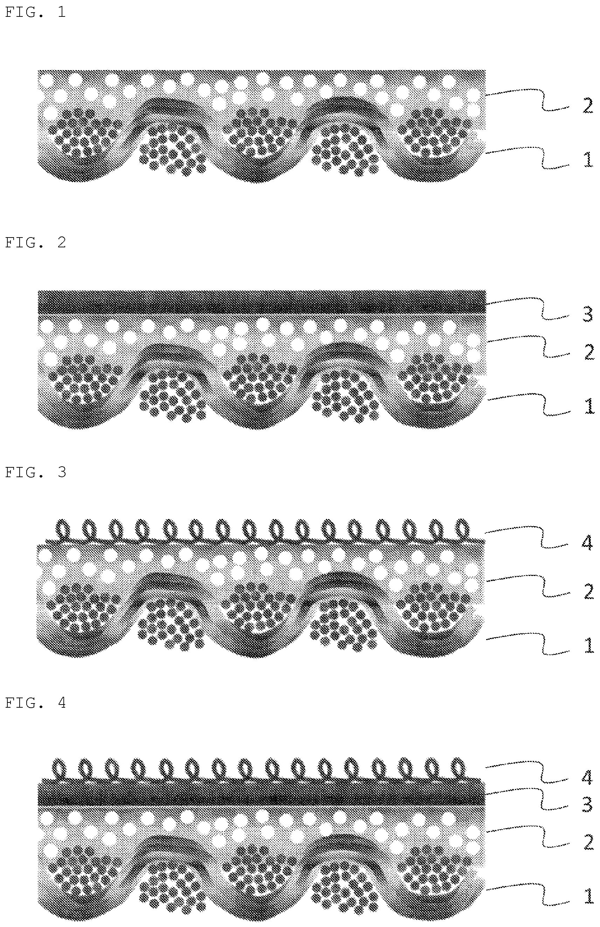

The moisture-permeable waterproof material illustrated in Fig. 1 is an aspect in which a porous polyurethane layer not containing a fluorinated compound is laminated on an face fabric.

The aspect of the pores in the polyurethane resin illustrated in the drawings is merely schematically illustrated, and the shape and size are not limited to this aspect.

As the polyurethane forming the porous polyurethane layer, a polyurethane that can be obtained by carrying out a reaction of a polyol compound (A) having at least two hydroxy groups reactive with isocyanate groups, an isocyanate compound (B) having an isocyanate structure and having at least two isocyanate groups, and a chain extender (C) added as necessary in a reaction solution containing a polar solvent (D) soluble in water and terminating the polymerization with a reaction terminator (E) is preferable.

The polyurethane may be a polyurethane composed of only urethane bonds or a polyurethane/polyurea resin containing urea bonds.

Examples of the polyol compound (A) include a polyester polyol containing an ester bond, a polyether polyol containing an ether bond, and a polycarbonate polyol containing a carbonate group.

Examples of the isocyanate compound (B) include tolylene diisocyanate (TDI), diphenylmethane diisocyanate (MDI), polymeric MDI, hexamethylene diisocyanate (HMDI), xylylene diisocyanate (XDI), tetramethylxylylene diisocyanate (TMXDI), isophorone diisocyanate (IPDI), and hydrogenated MDI.

Examples of the chain extender (C) include aliphatic diols such as ethylene glycol, 1,4-butanediol, 1,3-butanediol (1,3-butylene glycol), neopentyl glycol, 1,5-pentanediol, methylpentanediol, 1,6-hexanediol, 1,7-heptanediol, 1,8-octanediol, 1,9-nonanediol, and 1,10-decanediol, alicyclic diols such as 1,4-cyclohexanediol and hydrogenated xylylene glycol, and aromatic diols such as xylylene glycol.

The polar solvent (D) is not particularly limited, but preferably easily dissolves the isocyanate compound (B), and examples thereof include dimethylformamide (DMF) and dimethyl sulfoxide (DMSO).

The reaction terminator (E) is used for causing a reaction at a terminal of the chemical structure in the polyurethane polymerization reaction to terminate polymerization at a target viscosity. As the reaction terminator (E), monohydric and polyhydric alcohols, monovalent amines, and the like can be used. Examples thereof include monohydric and polyhydric alcohols (such as methanol, ethanol, butanol, propylene glycol, higher alcohol, and higher fatty acid ester containing hydroxy group) and monovalent amines (such as methylamine and butylamine).

Each of the components (A) to (E) may be used singly, or two or more thereof may be used as a mixture.

In the polymerization of the polyurethane, the reaction temperature may be the same as the temperature usually employed in the urethanization reaction, and when the polar solvent (D) is used, the reaction temperature is usually 30 to 90°C.

As a method for laminating the porous polyurethane layer on the fabric, a polyurethane solution containing the polyurethane may be directly applied to a surface of the fabric and wet-coagulated, or a sheet of the porous polyurethane layer may be prepared by wet coagulation after applying the polyurethane solution to a base material other than the fabric, and the sheet may be bonded to the surface of the fabric.

As a method for applying the polyurethane solution to the fabric or the base material, any method generally called a direct coating method is available, and various coating methods such as knife coating, knife-over-roll coating, and reverse roll coating can be used.

When the sheet of the porous polyurethane layer is prepared, the base material may be any material as long as the sheet can be peeled off, and for example, a fabric different from the above fabric, a release paper, or the like can be used. After the sheet is formed, an adhesive can be applied to a surface layer of the sheet to bond the sheet to the fabric. A waterproof fabric can be obtained by peeling off the base material after the adhesive is solidified.

The moisture-permeable waterproof material of the present invention is formed by attaching a silicone-based water repellent to the inner surface of pores of the porous polyurethane layer.

As the silicone-based water repellent, straight silicone oil and modified silicone oil can be used.

Examples of the straight silicone oil include dimethyl silicone oil, methyl phenyl silicone oil, and methyl hydrogen silicone oil.

Examples of the modified silicone oil include products obtained by modifying straight silicone oil with an alkyl, an aralkyl, a polyether, a higher fatty acid ester, a fluoroalkyl, an amino, an epoxy, a carboxyl, an alcohol, or the like.

Among the modified silicone oils, reactive silicone oils containing a reactive group in the molecule are preferable, and among them, carboxyl-modified silicone oils are preferable from the viewpoint of imparting adhesiveness and water repellency.

Examples of the silicone-based compound used as the silicone-based water repellent include those disclosed in Japanese Patent Laid-open Publication No. 2017-218713, Japanese Patent Laid-open Publication No. 2017-226946, Japanese Patent Laid-open Publication No. 2017-155095, Japanese Patent Laid-open Publication No. 2017-218713, and the like.

Examples of commercially available products of the silicone-based compound used as the silicone-based water repellent include Geranex (registered trademark) SH (Matsumoto Yushi-Seiyaku Co., Ltd), DRYPON (registered trademark) 600E (manufactured by Nicca Chemical Co., Ltd.), RIKEN PALAN SG-54 (Mikiriken Industrial Co., Ltd.), LIGHT SILICONE P-290E (HOKKO CHEMICALS Co., Ltd.), POLON (registered trademark) MR (Shin-Etsu Chemical Co., Ltd.), POLON (registered trademark) MF-49 (Shin-Etsu Chemical Co., Ltd.), NEOSEED (registered trademark) NR-8000 (Nicca Chemical Co., Ltd.), KF-96 series (Shin-Etsu Chemical Co., Ltd.), KF8005 (Shin-Etsu Chemical Co., Ltd.), KF8010 (Shin-Etsu Chemical Co., Ltd.), KF4003 (Shin-Etsu Chemical Co., Ltd.), X-22-3701E (Shin-Etsu Chemical Co., Ltd.), SF-8417 (Dow Toray Co., Ltd.), BY16-880 (Dow Toray Co., Ltd.), and MQ-1600 (Dow Toray Co., Ltd.).

The moisture-permeable waterproof material of the present invention can be efficiently obtained, for example, by attaching the silicone-based water repellent to the surface of the laminated sheet including the laminate of the porous polyurethane layer and the fabric, the surface being opposite to the surface of the porous polyurethane layer laminated with the fabric. That is, a method for producing the moisture-permeable waterproof material of the present invention is a method for producing a moisture-permeable waterproof material including a porous polyurethane layer and a fabric, the method including a step of attaching a silicone-based water repellent to a surface of a laminated sheet including a laminate of the porous polyurethane layer and the fabric, the surface being opposite to a surface of the porous polyurethane layer laminated with the fabric.

As a method for attaching the silicone-based water repellent, the silicone-based water repellent may be directly applied to the porous polyurethane layer, or may be applied from the fabric side. In order to efficiently permeate the silicone-based water repellent, it is preferable to directly apply the silicone-based water repellent to the porous polyurethane layer.

As a method for applying the silicone-based water repellent, various methods capable of performing one-side treatment such as gravure, a cylinder roll method, spraying, and kiss coating can be selected.

The moisture-permeable waterproof material of the present invention is preferably formed by further laminating a non-porous hydrophilic resin layer and/or a second fabric on the surface of the porous polyurethane layer opposite to the surface laminated with the fabric in order to improve the water resistance.

Fig. 2 illustrates an aspect in which a non-porous hydrophilic resin layer is added for the purpose of further improving the water resistance of the moisture-permeable waterproof material illustrated in Fig. 1.

For the non-porous hydrophilic resin layer, a hydrophilic polyurethane resin in which 20 to 60 mol% of the polyol component is at least one of polyethylene glycol and polypropylene glycol is preferably used. A polyurethane resin in which 20 to 60 mol% of the polyol component is polyethylene glycol is particularly preferable. Other polyol components are not particularly limited, and for example, polyester glycols, polycarbonate glycols, and other polyether glycols are used. As a polyisocyanate component constituting the hydrophilic polyurethane resin, known aliphatic polyisocyanates and aromatic polyisocyanates can be used, and examples thereof include hexamethylene diisocyanate, toluene diisocyanate, xylene diisocyanate, isophorone diisocyanate, and 4,4'-diphenylmethane diisocyanate.

The hydrophilic non-porous membrane preferably has heat fusibility. By having heat fusibility, the hydrophilic non-porous membrane can be uniformly caused to adhere without dissolving the microporous membrane. The heat fusibility is imparted by using a low-melting material or a crosslinking agent.

The thickness of the hydrophilic non-porous membrane is preferably 1 to 10 µm.

In the non-porous hydrophilic resin layer, a film having high moisture permeability may be bonded with a moisture-curable polyurethane-based hot melt or the like, or the entire surface may be coated with a resin having high moisture permeability. In addition, a partial print may be used for improving designability and texture of the surface of the porous resin layer.

Examples of a method for forming the non-porous hydrophilic resin layer include a method in which the porous polyurethane layer is directly coated, a method in which the non-porous hydrophilic resin layer is previously applied and formed on release paper or the like, and a method in which a film is formed by extrusion.

Fig. 3 illustrates an aspect in which the second fabric (backing) is further bonded for the purpose of protecting the porous polyurethane layer of the moisture-permeable waterproof material illustrated in Fig. 1. Fig. 4 illustrates an aspect in which a fabric layer is further bonded to the surface of the non-porous hydrophilic resin layer of the aspect illustrated in Fig. 2.

In Figs. 3 and 4, the second fabric is illustrated as a knitted fabric, but the use of a woven fabric or a nonwoven fabric is not limited.

As the second fabric, a plain weave fabric (taffeta) of various synthetic fibers, a twill fabric, a special woven fabric such as satin, a knitted fabric, various fabrics of natural fibers and semisynthetic fibers, a nonwoven fabric, or the like can be used. Among them, a nylon tricot knitted fabric is more preferable in terms of texture and the like.

In the case of an aspect including the second fabric, the timing of attaching the silicone-based water repellent to the porous polyurethane layer may be before or after bonding the second fabric layer, but from the viewpoint of efficiently applying the silicone-based water repellent to the porous polyurethane layer, it is preferable to apply the silicone-based water repellent before bonding.

In the moisture-permeable waterproof material according to an aspect in which the non-porous hydrophilic resin layer and/or the second fabric are further laminated, it is preferable that there is no peeling between the porous polyurethane layer and the non-porous hydrophilic resin layer or the second fabric in contact with the porous polyurethane layer. In the present invention, peeling (delamination) refers to an event in which the non-porous hydrophilic resin layer peels off or becomes loose from the porous polyurethane layer during washing.

The moisture-permeable waterproof material of the present invention preferably has a peel strength between the porous polyurethane layer and the fabric of 200 cN/cm or more. The peel strength is measured according to the measurement method of JIS L 1086 (2020).

The moisture-permeable waterproof material of the present invention preferably has a water resistance of 5,000 mm H2O or more after washing 10 times, and is preferably not wetted with water in a Suter test of holding at a water pressure of 2,000 mm H2O for 10 minutes. In the present invention, the water resistance test is performed in accordance with the measurement method described in Method B in JIS L 1092:2020 (high water pressure method). The Suter test is a method in which a water pressure of 2,000 mm H2O is held for 10 minutes using a simplified water resistance measuring machine to evaluate the waterproof property of the membrane. The waterproof property is determined based on the presence or absence of water wetting of the membrane after 10 minutes.

In the moisture-permeable waterproof material according to the aspect in which the non-porous hydrophilic resin layer and/or the second fabric are further laminated, the water resistance after washing 10 times is preferably 10,000 mm H2O or more.

The moisture-permeable waterproof material of the present invention is excellent in water resistance performance having wash durability and adhesion at each interface, and can be applied as a fabric of various products required to have moisture permeability, waterproofness, and durability, for example, clothing such as rain gear, shoes, bags, and outdoor goods such as tents.

### EXAMPLES

Examples of the present invention will be described below. It is to be noted that the present invention is not limited only to the following examples.

### [Measurement and evaluation methods]

Measurement and evaluation methods will be described below. When the moisture-permeable waterproof material is provided with the non-porous hydrophilic resin layer, the backing (second fabric), or the non-porous hydrophilic resin layer and the backing (second fabric), the moisture-permeable waterproof material including the non-porous hydrophilic resin layer and/or the backing (second fabric) is to be measured and evaluated.

### (1) Distribution of silicone-based water repellent in porous polyurethane layer

A cross section of the moisture-permeable waterproof material was observed with a scanning electron microscope (SEM) at a magnification of 2,000 times, and the presence of the Si element in the porous polyurethane layer was confirmed by energy dispersive X-ray spectroscopy (EDX) to identify the distribution status.

### (2) Water resistance

Measurement was performed in accordance with Method B in JIS L 1092:2020 (high water pressure method). At the time of measurement, in order to suppress the elongation of the moisture-permeable waterproof material to be measured, a nylon-attached white cloth used for measurement of color fastness was used as a taffeta cover. In the case of measuring the water resistance after washing 10 times, washing was repeated 10 times using the C4M method of JIS L 1930 (practical machine test method), and then the water resistance was measured.

### (3) Presence or absence of water wetting by Suter test

Washing of the moisture-permeable waterproof material was repeated 10 times according to the C4M method of JIS L 1930 (practical machine test method). Using a simplified water resistance measuring machine, a water pressure of 2,000 mm H2O was applied from the face fabric side of the moisture-permeable waterproof material, and held for 10 minutes, and the presence or absence of water wetting on the surface opposite to the face fabric after 10 minutes was determined. A sample in which no water wetting of the membrane was observed was evaluated as "A", and a sample in which water wetting of the membrane was observed was evaluated as "B".

### (4) Water vapor transmission rate

Measurement was performed in accordance with Method A-1 (calcium chloride method) in JIS L 1099 (2021).

### (5) Peel strength

Measurement was performed in accordance with JIS L 1086:2020 Testing methods for fusible interlining fabrics and laminated fabrics.

### (6) Presence or absence of peeling (delamination)

A moisture-permeable waterproof material with a non-porous hydrophilic resin layer, with a backing (second fabric), or with a non-porous hydrophilic resin layer and a backing (second fabric) was repeatedly washed 10 times by the C4M method of JIS L 1930 (practical machine test method), and then the presence or absence of an event in which the non-porous hydrophilic resin layer or the backing (second fabric) in contact with the porous polyurethane layer was peeled off or became loose from the porous polyurethane layer was visually determined and evaluated. If there was no loosening or peeling, it was described as "no delamination".

### (7) Quality of moisture-permeable waterproof material

It was visually determined whether a coating resin used for forming the porous polyurethane layer penetrated into the fabric to the back side, that is, whether the fabric quality was impaired (resin penetration), and evaluation was performed. Based on whether the sample was unsuitable for clothing, a sample in which penetration of the resin was observed was evaluated as "B", and a sample in which penetration of the resin was not observed was evaluated as "A".

### [Production process]

### (1) Preparation of fabric for face fabric

Nylon ripstop taffeta composed of nylon filament yarns having a fineness of 50 denier (56 dtex) was scoured and dyed by a conventional method. This fabric was immersed in a diluted solution of 30 g/l of a non-fluorine-based water repellent (NR-7200 manufactured by Nicca Chemical Co., Ltd.), squeezed with a mangle to a squeezing rate of 40%, and then subjected to a drying heat treatment at 150°C for 30 seconds with a heat setter to provide a fabric for an face fabric.

### (2) Preparation of polyurethane resin composition for coating

In a reaction vessel equipped with a stirrer, a polycarbonate polyol (hexamethylene carbonate diol), a polyether polyol (polytetramethylene glycol), an isocyanate (diphenylmethane diisocyanate), dimethylformamide, ethylene glycol, propylene glycol monooleate, and propylene glycol were added and stirred to provide a polycarbonate-based polyurethane resin solution having a urethane resin concentration of 25.0% and a viscosity of 82,000 mPa·s (30°C).

To 80 parts by mass of the obtained polycarbonate-based polyurethane resin solution, 5 parts by mass of silica fine powder ("REOLOSIL" (registered trademark) MT-10 manufactured by Tokuyama Corporation, silica reacted with dimethyldichlorosilane in gas phase) was added, and the mixture was sufficiently immersed in 50 parts by mass of DMF, dispersed and stirred for about 15 minutes with a homomixer, and then stirred to provide a liquid polyurethane resin composition for coating containing a polycarbonate-based polyurethane resin.

### (3) Coating with polyurethane resin

The above water-repellent treated fabric was coated with the resin composition for coating at an application amount of 150 g/m² using a knife over roll coater, and immersed in a gelation bath containing an aqueous solution containing 15 mass% of DMF as a coagulation liquid at 30°C for 2 minutes to wet-coagulate the liquid composition of the polycarbonate-based polyurethane resin. Thereafter, the product was washed with hot water at 80°C for 10 minutes and dried with hot air at 140°C to provide a moisture-permeable waterproof material in which a porous polyurethane layer was laminated on the fabric.

### (4) Silicone water repellent treatment

A silicone-based water repellent was applied at an application amount of 30 g/m² to the surface of the moisture-permeable waterproof material obtained in the above (3) on the porous polyurethane layer side using a gravure roll, and the silicone-based water repellent was allowed to permeate the porous polyurethane layer. Thereafter, drying was performed at 120°C, and then drying heat treatment was performed at 150°C for 30 seconds.

### (5) Lamination of non-porous hydrophilic resin film

A polyurethane solution was prepared with the composition shown in Formulation 1 below.

### (Formulation 1)

Polyether-based polyurethane LEO COAT U-6285M (LEO COAT (registered trademark) U-6285M manufactured by Toray Coatex Co., Ltd.) 100 parts by mass
MEK 50 parts by mass
Toluene 50 parts by mass.

Release paper (EV130TPD manufactured by LINTEC Corporation) was coated with the above polyurethane solution with a clearance of 50 µm using a knife over roll coater. Subsequently, hot air drying was performed at 80°C to provide a non-porous hydrophilic resin film having a thickness of 5 µm.

The above non-porous hydrophilic resin film was superposed on the porous polyurethane layer of the moisture-permeable waterproof material after the above (4), and laminated with a hot laminator under conditions of a temperature of 120°C, a pressure of 0.9807 MPa (10 kg/cm²), and a speed of 20 m/min to provide a moisture-permeable waterproof material with a non-porous hydrophilic resin layer (in the table, the layer is represented as "HB").

### (6) Bonding of backing

Nylon tricot (18d half tricot: W × C = 36 × 40) was used as the backing (second fabric).

On the porous polyurethane layer of the moisture-permeable waterproof material after the above (4) or on the non-porous hydrophilic resin layer of the moisture-permeable waterproof material after the above (5), a polyurethane hot melt (product number: LA7575UV) was applied with a 30-mesh gravure roll and dried with hot air at 100°C, and then the backing was bonded to the product and cured at 40°C for 24 hours while being pressure-bonded, thereby providing a moisture-permeable waterproof material with the backing (second fabric).

### [Example 1]

A moisture-permeable waterproof fabric was produced through the production steps (1) to (4). However, dimethyl silicone oil (KF-96 manufactured by Shin-Etsu Chemical Co., Ltd.) was used as the silicone-based water repellent in the production step (4). As for the distribution of the silicone-based water repellent in the porous polyurethane layer, the presence of the silicone-based water repellent was confirmed on the surface on the porous polyurethane layer side on which the application was performed and the inner surface of pores. That is, it was confirmed that the silicone-based water repellent adhered to the inner surface of pores.

### [Example 2]

A moisture-permeable waterproof fabric was produced through the production steps (1) to (4). However, carboxyl-modified silicone oil (X-22-3701E manufactured by Shin-Etsu Chemical Co., Ltd.) was used as the silicone-based water repellent in the production step (4). As for the distribution of the silicone-based water repellent in the porous polyurethane layer, the presence of the silicone-based water repellent was confirmed on the surface on the porous polyurethane layer side on which the application was performed and the inner surface of pores. That is, it was confirmed that the silicone-based water repellent adhered to the inner surface of pores.

### [Example 3]

The moisture-permeable waterproof fabric obtained in Example 2 was further processed in the production step (5) to provide a moisture-permeable waterproof fabric with a non-porous hydrophilic resin layer. As for the distribution of the silicone-based water repellent in the porous polyurethane layer, the presence of the silicone-based water repellent was confirmed on the surface on the porous polyurethane layer side on which the application was performed and the inner surface of pores. That is, it was confirmed that the silicone-based water repellent adhered to the inner surface of pores.

### [Example 4]

The silicone water repellent in the production step (4) was applied to the surface on the face fabric side at an application amount of 60 g/m². A moisture-permeable waterproof fabric with a non-porous hydrophilic resin layer was obtained in the same manner as in Example 3 except for the above. As for the distribution of the silicone-based water repellent in the porous polyurethane layer, the presence of the silicone-based water repellent was confirmed on the surface on the face fabric side on which the application was performed and the inner surface of pores. That is, it was confirmed that the silicone-based water repellent adhered to the inner surface of pores.

### [Example 5]

The moisture-permeable waterproof fabric obtained in Example 1 was further processed in the production step (5) to provide a moisture-permeable waterproof fabric with a non-porous hydrophilic resin layer. As for the distribution of the silicone-based water repellent in the porous polyurethane layer, the presence of the silicone-based water repellent was confirmed on the surface on the porous polyurethane layer side on which the application was performed and the inner surface of pores. That is, it was confirmed that the silicone-based water repellent adhered to the inner surface of pores.

### [Example 6]

A moisture-permeable waterproof fabric with a non-porous hydrophilic resin layer was obtained in the same manner as in Example 5 except that the application amount of the silicone water repellent in the production step (4) was changed to 250 g/m². As for the distribution of the silicone-based water repellent in the porous polyurethane layer, the presence of the silicone-based water repellent was confirmed on the surface on the porous polyurethane layer side on which the application was performed and the inner surface of pores. That is, it was confirmed that the silicone-based water repellent adhered to the inner surface of pores.

### [Example 7]

The moisture-permeable waterproof fabric obtained in Example 2 was further processed in the production step (6) to provide a moisture-permeable waterproof fabric with a backing (second fabric). As for the distribution of the silicone-based water repellent in the porous polyurethane layer, the presence of the silicone-based water repellent was confirmed on the surface on the porous polyurethane layer side on which the application was performed and the inner surface of pores. That is, it was confirmed that the silicone-based water repellent adhered to the inner surface of pores.

### [Example 8]

The moisture-permeable waterproof fabric obtained in Example 2 was further subjected to processing in the production steps (5) and (6) in this order to provide a moisture-permeable waterproof fabric with a non-porous hydrophilic resin layer and a backing (second fabric). As for the distribution of the silicone-based water repellent in the porous polyurethane layer, the presence of the silicone-based water repellent was confirmed on the surface on the porous polyurethane layer side on which the application was performed and the inner surface of pores. That is, it was confirmed that the silicone-based water repellent adhered to the inner surface of pores.

### [Comparative Example 1]

A moisture-permeable waterproof fabric was produced through the production steps (1) to (3).

### [Comparative Example 2]

A moisture-permeable waterproof fabric was obtained in the same manner as in Comparative Example 1 except that 1 part by mass of carboxyl-modified silicone oil (X-22-3701E manufactured by Shin-Etsu Chemical Co., Ltd.) was added as an internal agent to the resin composition for coating in the production step (2). As for the distribution of the silicone-based water repellent in the porous polyurethane layer, the presence of the silicone-based water repellent was confirmed inside the polyurethane resin instead of localization on the inner surface of pores. That is, the silicone-based water repellent did not adhere to the inner surface of pores.

For each of the moisture-permeable waterproof materials obtained in examples and comparative examples, the distribution of the silicone-based water repellent in the porous polyurethane layer, water resistance (initial and after washing 10 times), a Suter test (after washing 10 times), water vapor transmission rate (A-1), peel strength, and the presence or absence of delamination and quality after washing 10 times were measured and evaluated. The results are shown in Tables 1 and 2.

**[Table 1]**

| | Example 1 | Example 2 | Example 3 | Example 4 | Example 5 |
|---|---|---|---|---|---|
| Face fabric | Ripstop taffeta | ← | ← | ← | ← |
| Water repellent for face fabric | Non-fluorine-based water repellent | ← | ← | ← | ← |
| Resin of porous polyurethane layer | Polycarbonate-based resin | ← | ← | ← | ← |
| Silicone-based water repellent applied to porous polyurethane layer | Dimethyl silicone oil | Carboxyl-modified | Carboxyl-modified | Carboxyl-modified | Dimethyl silicone oil |
| Coated surface in production step (4) | Porous polyurethane layer side | Porous polyurethane layer side | Porous polyurethane layer side | Face fabric side | Porous polyurethane layer side |
| Application amount in production step (4) (g/m²) | 30 | 30 | 30 | 60 | 30 |
| Laminated configuration | Only coating | Only coating | Coating + HB | Coating + HB | Coating + HB |
| Distribution of silicone-based water repellent in porous polyurethane layer | Present on inner surface of pores | Present on inner surface of pores | Present on inner surface of pores | Present on inner surface of pores | Present on inner surface of pores |
| Water resistance (before washing) (mm H2O) | 10000 | 10000 | 20000 | 20000 | 19000 |
| Water resistance (after washing 10 times) (mm H2O) | 5500 | 6000 | 14000 | 14000 | 12000 |
| Presence or absence of water wetting by Suter test | B | A | A | A | B |
| Water vapor transmission rate (A-1) (g) | 10000 | 10000 | 6000 | 6000 | 6000 |
| Peel strength between porous polyurethane layer/face fabric (cN/cm) | 200 | 200 | 200 | 200 | 200 |
| Presence or absence of delamination after washing | - | - | No delamination | No delamination | No delamination |
| Peel strength between porous polyurethane layer/backing (cN/cm) | - | - | - | - | - |
| Quality of moisture-permeable waterproof material | A | A | A | A | A |

**[Table 2]**

| | Example 6 | Example 7 | Example 8 | Comparative Example 1 | Comparative Example 2 |
|---|---|---|---|---|---|
| Face fabric | Ripstop taffeta | ← | ← | ← | ← |
| Water repellent for face fabric | Non-fluorine-based water repellent | ← | ← | ← | ← |
| Resin of porous polyurethane layer | Polycarbonate-based resin | ← | ← | ← | ← |
| Silicone-based water repellent applied to porous polyurethane layer | Dimethyl silicone oil | Carboxyl-modified | Carboxyl-modified | - | Carboxyl-modified |
| Coated surface in production step (4) | Porous polyurethane layer side | Porous polyurethane layer side | Porous polyurethane layer side | - | (Internal addition) |
| Application amount in production step (4) (g/m²) | 250 | 30 | 30 | - | - |
| Laminated configuration | Coating + HB | Coating + lining | Coating + HB + lining | Only coating | Only coating |
| Distribution of silicone-based water repellent in porous polyurethane layer | Present on inner surface of pores | Present on inner surface of pores | Present on inner surface of pores | Absent | Present in polyurethane resin |
| Water resistance (before washing) (mm H2O) | 18000 | 10000 | 20000 | 10000 | 10000 |
| Water resistance (after washing 10 times) (mm H2O) | 10000 | 6000 | 14000 | 1000 | 5000 |
| Presence or absence of water wetting by Suter test | A | A | A | B | A |
| Water vapor transmission rate (A-1) (g) | 3000 | 8000 | 5000 | 10000 | 10000 |
| Peel strength between porous polyurethane layer/face fabric (cN/cm) | 200 | 200 | 200 | 200 | 50 |
| Presence or absence of delamination after washing | No delamination | - | No delamination | - | - |
| Peel strength between porous polyurethane layer/backing (cN/cm) | - | 200 cN/cm | 200 cN/cm | - | - |
| Quality of moisture-permeable waterproof material | A | A | A | A | B |

### DESCRIPTION OF REFERENCE SIGNS

1: Fabric (face fabric)
2: Porous polyurethane layer
3: Non-porous hydrophilic resin layer
4: Second fabric (backing)

## Claims

1. A moisture-permeable waterproof material comprising a fabric and a porous polyurethane layer laminated together, wherein a silicone-based water repellent adheres to an inner surface of pores of the porous polyurethane layer.

2. The moisture-permeable waterproof material according to claim 1, wherein the silicone-based water repellent is modified silicone.

3. The moisture-permeable waterproof material according to claim 1 or 2, having a water resistance of 5,000 mm H2O or more after washing 10 times, and showing no water wetting in a Suter test of holding at a water pressure of 2,000 mm H2O for 10 minutes.

4. The moisture-permeable waterproof material according to claim 1 or 2, wherein a peel strength between the porous polyurethane layer and the fabric is 200 cN/cm or more.

5. The moisture-permeable waterproof material according to claim 1 or 2, wherein a non-porous hydrophilic resin layer and/or a second fabric is further laminated on a surface of the porous polyurethane layer opposite to a surface laminated with the fabric.

6. The moisture-permeable waterproof material according to claim 5, wherein there is no peeling between the porous polyurethane layer and the non-porous hydrophilic resin layer or the second fabric, in contact with the porous polyurethane layer.

7. The moisture-permeable waterproof material according to claim 5, wherein water resistance after washing 10 times is 10,000 mm H2O or more.

8. A method for producing a moisture-permeable waterproof material including a porous polyurethane layer and a fabric laminated, the method comprising a step of attaching a silicone-based water repellent to a surface of a laminated sheet including a laminate of the porous polyurethane layer and the fabric, the surface being opposite to a surface of the porous polyurethane layer laminated with the fabric.

9. The method for producing a moisture-permeable waterproof material according to claim 8, wherein a coating method is used in the step of attaching a silicone-based water repellent.
